(19) Europäisches Patentamt
European Patent Office
Office européen des brevets

(11) Veröffentlichungsnummer: **0 019 761**
**A1**

# (12) EUROPÄISCHE PATENTANMELDUNG

(21) Anmeldenummer: **80102484.5**

(51) Int. Cl.³: **C 08 L 59/02**

(22) Anmeldetag: **07.05.80**

(30) Priorität: **25.05.79 DE 2921167**

(43) Veröffentlichungstag der Anmeldung: **10.12.80**
**Patentblatt 80/25**

(84) Benannte Vertragsstaaten: **AT BE CH DE FR GB IT LI LU NL SE**

(71) Anmelder: **BASF Aktiengesellschaft,**
**Carl-Bosch-Strasse 38, D-6700 Ludwigshafen (DE)**

(72) Erfinder: **Boehlke, Klaus, Dr.,**
**Gerhart-Hauptmann-Strasse 53, D-6711 Hessheim (DE)**
Erfinder: **Hilt, Albrecht, Dr., Stifterstrasse 19,**
**D-6700 Ludwigshafen (DE)**

(54) **Verstärkte Polyoxymethylenformmassen.**

(57) Glasfaserverstärkte Polyoxymethylen-Formmassen enthalten 0,1 bis 3,0% Alkoxymethylmelamine, vorzugsweise Tetramethoxymethylmelamin. Die Formmassen weisen verbesserte mechanische Eigenschaften auf und neigen bei der Verarbeitung durch Spritzguss nicht zur Verfärbung.

EP 0 019 761 A1

## Verstärkte Polyoxymethylenformmassen

Es ist bekannt, Polyoxymethylene mit Glasfasern zu verstärken; durch diese Maßnahme kann die Steifigkeit der Polyoxymethylene beträchtlich erhöht werden, wodurch ihre Einsatzmöglichkeiten erweitert werden können.

Unbefriedigend ist aber im allgemeinen die Verbesserung der Zugfestigkeit, die bei Polyoxymethylenen durch die Glasfaserverstärkung erzielt werden kann.

Nach der DE-OS 24 08 534 kann die Zugfestigkeit und die Schlagzähigkeit von glasfaserverstärkten Polyoxymethylenen durch Zusatz von Alkoxymethylharnstoffen verbessert werden. Für viele Anwendungszwecke ist diese Verbesserung jedoch nicht ausreichend. Außerdem hat sich gezeigt, daß bei der Spritzgußverarbeitung von Formmassen nach der DE-OS 24 08 534 in manchen Fällen eine Braunfärbung auftritt.

Der Erfindung lag daher die Aufgabe zugrunde, glasfaserverstärkte Polyoxymethylenformmassen mit verbesserten mechanischen Eigenschaften zu entwickeln, die bei der Spritzgußverarbeitung nicht zur Verfärbung neigen.
Diese Aufgabe wird erfindungsgemäß dadurch gelöst, daß man den glasfaserverstärkten Polyoxymethylenen 0,1 bis 3,0 Gew.-% an Alkoxymethylmelaminen einverleibt. Bevorzugte Alkoxymethylmelamine sind solche der allgemeinen Formel

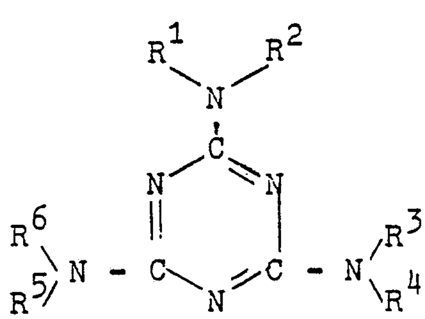

(I)

Dd/BL

Die Reste $R^1$ bis $R^6$ können Wasserstoffatome oder Alkoxymethylgruppen $-CH_2OR'$ sein, wobei R' ein Alkylrest mit 1 bis 4 C-Atomen ist. Dabei sind mindestens 2, vorzugsweise 4 der Reste $R^1$ bis $R^6$ Alkoxymethylgruppen.

Verbindungen der allgemeinen Formel I sind beispielsweise Melamine, bei denen 2 bis 6 Wasserstoffatome durch Methoxymethyl- oder Äthoxymethylgruppen substituiert sind. Besonders bevorzugt ist Tetramethoxymethylmelamin.

Die bevorzugte Menge an Alkoxymethylmelamin beträgt 0,5 bis 2,0 Gew.-%. Die Melamine können nach an sich bekannten Verfahren hergestellt werden.

Die Glasfasern, die zur Verstärkung der Polyoxymethylene eingesetzt werden, sind vorzugsweise alkaliarme E-Glasfasern mit einem Durchmesser von 5 bis 20, vorzugsweise 8 bis 15 µm. Ihre mittlere Länge in den verstärkten Mischungen liegt zwischen 0,05 und 1,0 mm, vorzugsweise zwischen 0,1 und 0,50 mm. Die Glasfasern sind gewöhnlich in Mengen von 10 bis 50 % in den Formmassen enthalten. Die Glasfasern sind in bekannter Weise mit Schlichten und Haftvermittlern auf Organosilanbasis ausgerüstet.

Polyoxymethylene im Sinne der vorliegenden Erfindung sind Homopolymere des Formaldehyds und Copolymere des Formaldehyds oder des Trioxans mit cyclischen und linearen Formalen wie z.B. 1,3-Dioxolan, Butandiolformal oder Epoxiden wie Äthylen- oder Propylenoxid.

Die Homopolymeren sollen thermisch stabile Endgruppen, wie z.B. Ester- oder Äthergruppen besitzen. Die Copolymeren des Trioxans sollen zu mehr als 50 %, vorzugsweise zu mehr als 75 % Oxymethylengruppen und mindestens etwa

0,1 % Gruppen des Comonomeren enthalten, das mindestens 2 benachbarte C-Atome in die Kette einführt. Solche Copolymere können in bekannter Weise durch kationische Copolymerisation von Trioxan mit geeigneten Comonomeren wie z.B. cyclischen Äthern oder Acetalen wie Äthylenoxid, 1,3-Dioxolan, 1,3-Dioxan, 1,3-Dioxacycloheptan oder mit linearen Oligo- oder Polyformalen oder Acetalen wie z.B. Polydioxolan, Polybutandiolformal u.ä. hergestellt werden.

Die Polymeren können die üblichen Stabilisatoren gegen Wärme und Licht oder sonstige Zuschläge, wie z.B. Farbstoffe, enthalten.

Die Einarbeitung der Alkoxymethylolharnstoffe erfolgt zweckmäßig zusammen mit den Glasfasern und den sonstigen Zusätzen nach bekannten Verfahren z.B. durch Mischen auf einem geeigneten Extruder. Die Glasfasern können als Rovings oder als geschnittene Glasseide eingesetzt werden.

Beispiel

Auf einem Einwellenextruder werden Polyoxymethylen mit 25 Gew.-% Glasfasern von 6 mm Länge sowie ggf. ein Zusatz aufgeschmolzen. Das bei 200°C homogenisierte Gemisch wird durch eine Düse als Strang ausgepreßt und granuliert. Aus dem Granulat werden bei 200°C Prüfkörper gespritzt und die mechanischen Werte bestimmt. Als Polyoxymethylen wird ein Copolymerisat von Trioxan mit 4 Gew.-% Äthylenoxid, Meltindex bei 190°C und 2,16 kp Last = 8 bis 10, eingesetzt.

Die Versuchsergebnisse sind in der Tabelle zusammengestellt.

Tabelle

| Versuch | Zusatz | Menge Gew.-% | Zugfestigkeit [N/mm²] nach DIN53455 | Biegefestigkeit [N/mm²] nach DIN 53 455 | Schlagzähigkeit [KJ/m²] nach DIN 53 455 |
|---|---|---|---|---|---|
| 1 | - | - | 95 | 120 | 13 |
| 2 | Tetramethoxy-methylmelamin | 0,5 | 130 | 170 | 24 |
| 3 | Tetramethoxy-methylmelamin | 1,0 | 145 | 210 | 32 |
| 4 | Dimethoxy-methylharnstoff | 1,0 | 120 | 160 | 20 |

## Patentansprüche

1. Thermoplastische Formmassen aus Polyoxymethylenen und Glasfasern, dadurch gekennzeichnet, daß diese 0,1 bis 3,0 %, bezogen auf das Gesamtgewicht der Mischung, an Alkoxymethylmelaminen enthalten.

2. Thermoplastische Formmassen gemäß 1, dadurch gekennzeichnet, daß ein Alkoxymethylmelamin der allgemeinen Formel

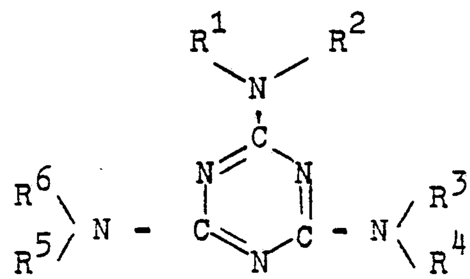

in der $R^1$ bis $R^6$ Wasserstoff oder Alkoxymethylgruppen $-CH_2OR'$ sind mit $R' = C_1$- bis $C_4$-Alkyl, wobei mindestens zwei der Reste $R^1$ bis $R^6$ Alkoxymethylgruppen sind, eingesetzt wird.

3. Thermoplastische Formmassen nach Anspruch 1, dadurch gekennzeichnet, daß Tetramethoxymethylamin eingesetzt wird.

4. Thermoplastische Formmassen nach Anspruch 1, dadurch gekennzeichnet, daß sie 10 bis 50 Gew.-% Glasfasern enthalten.

0019761

Europäisches Patentamt

# EUROPÄISCHER RECHERCHENBERICHT

Nummer der Anmeldung

EP 80 10 2484

| Kategorie | EINSCHLÄGIGE DOKUMENTE<br>Kennzeichnung des Dokuments mit Angabe, soweit erforderlich, der maßgeblichen Teile | betrifft Anspruch |
|---|---|---|
| | DE - B - 2 540 207 (DEGUSSA)<br>* Ansprüche; Spalte 7, Zeilen 30-37 *<br>-- | 1-4 |
| | US - A - 3 313 767 (F.M. BERARDINELLI et al.)<br>* Ansprüche; Spalte 3, Zeilen 41-43; Spalte 7, Zeilen 14-18 *<br>-- | 1-4 |
| | DE - B - 1 243 873 (VEB LEUNA)<br>* Anspruch; Beispiel 4; Spalte 5 *<br>-- | 1-4 |
| A | GB - A - 1 026 771 (ICI)<br>* Ansprüche; Seite 3, Zeilen 115-116; Seite 5, Zeile 115 *<br>----- | 1-4 |

KLASSIFIKATION DER ANMELDUNG (Int.Cl. 3)

C 08 L 59/02

RECHERCHIERTE SACHGEBIETE (Int. Cl. 3)

C 08 L 59/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✓ Der vorliegende Recherchenbericht wurde für alle Patentansprüche erstellt.

| Recherchenort | Abschlußdatum der Recherche | Prüfer |
|---|---|---|
| Den Haag | 28-08-1980 | DERAEDT |